# FASCICULE DE BREVET EUROPEEN

(11) **EP 3 137 368 B1**
(45) Date de publication et mention de la délivrance du brevet: **05.12.2018**
(21) Numéro de dépôt: 15717905.2
(22) Date de dépôt: 23.04.2015
(51) Int. Cl.: B62M 1/28, B62K 15/00, B62K 3/00, B62K 5/08, B62K 5/05

(54) **PROPULSEUR ET VÉHICULE INDIVIDUEL DE FAIBLE ENCOMBREMENT**
ANTRIEBSEINHEIT UND KOMPAKTES PERSONENFAHRZEUG
PROPULSION UNIT AND COMPACT INDIVIDUAL VEHICLE

(30) Priorité: 28.04.2014 FR 1400990
(43) Date de publication de la demande: 08.03.2017
(73) Titulaire: Bajard, Jean, 67370 Griesheim-sur-Souffel (FR)
(72) Inventeur: Bajard, Jean, 67370 Griesheim-sur-Souffel (FR)
(74) Mandataire: Hege, Frédéric
(86) Numéro de dépôt international: PCT/EP2015/058863
(87) Numéro de publication internationale: WO 2015/165807

(56) Documents cités:
- WO-A1-00/05127
- WO-A1-2004/045943
- WO-A1-2013/062429
- DE-A1- 10 209 093
- US-A- 3 513 924
- US-A1- 2003 042 059
- US-A1- 2009 315 294

## Description

La présente invention concerne le domaine des véhicules individuels. Elle concerne plus particulièrement un véhicule individuel pliable ou de faible encombrement pour un usage urbain et pliable pour pouvoir le transporter comme une valise à roulettes.

On connaît l'essor remarquable de la bicyclette comme moyen de transport individuel et comme instrument de sport et de loisir, ainsi que la grande variété des modèles proposés. On connaît en particulier les tentatives effectuées par beaucoup de fabricants en vue de concevoir des modèles de bicyclettes pliantes et/ou de faible encombrement, plus ou moins facilement logeables dans un coffre de voiture automobile par exemple. Mais de tels efforts sont condamnés à ne donner que des résultats limités, du point de vue de la compacité et de la facilité de manipulation des bicyclettes pliées, pour plusieurs raisons : la trop grande taille des roues parfois, l'encombrement et la propension à l'enchevêtrement du système de propulsion (pédales, pédalier, chaîne, pignons) ainsi que du guidon et des manettes de frein. De plus ces modèles pliants, lorsqu'ils sont compacts et ont de petites roues, sont peu stables et également peu rigides du fait de leurs moyens de pliage, ce qui réduit leur agrément et leur sécurité d'utilisation. Tous ces éléments expliquent aisément que le marché ouvert à ces modèles pliants et/ou de faible encombrement de bicyclette reste relativement limité. Cette limitation subsiste s'agissant de modèles à propulsion principalement ou exclusivement électrique, à cause du poids élevé des batteries.

Un besoin existe donc pour un véhicule de transport individuel conçu spécifiquement - contrairement à une bicyclette classique - en vue d'ajouter à sa fonctionnalité de base consistant à transporter son passager, celle d'avoir un faible encombrement et éventuellement de pouvoir se transformer en un bagage individuel à main aisément transportable car relativement léger, compact et capable de roulage comme le sont les valises à roulettes. Un tel véhicule pourrait donc adopter soit une configuration dite « normale » ou « de route », soit une configuration compactée dite « de bagage roulable » permettant de le loger facilement et sans risque d'enchevêtrement avec les objets voisins, dans un espace exigu tel qu'un coffre de voiture par exemple. Une troisième fonctionnalité, celle de pouvoir servir à transporter d'autres bagages plus ou moins lourds et encombrants, pourrait même, éventuellement, être ajoutée aux deux autres dans une telle conception aux objectifs plus globaux.

Typiquement, un tel véhicule serait destiné à des déplacements en zone urbaine, sur de relativement courtes distances. Sa vitesse de pointe serait réduite par rapport à celle d'une bicyclette classique, pour permettre notamment son évolution sur un trottoir sans enfreindre la réglementation protégeant les piétons. Une vitesse maximale de l'ordre de 12 à 15 km/h - ou même 20 km/h sur route - peut être jugée convenable dans ces conditions, tout en étant significativement plus rapide que celle d'un piéton. L'ensemble des caractéristiques de ce véhicule lui permettrait donc de servir, plus particulièrement, de mode de transport complémentaire d'un autre mode principal : par exemple, servir à rejoindre une gare deux fois plus rapidement qu'à pied - au moins - et au prix d'un moindre effort, pour être ensuite embarqué dans un train, en configuration compactée et en tant que bagage, puis être réutilisé à l'arrivée du train, soit comme véhicule, soit éventuellement comme porte bagages, pour finalement atteindre un immeuble, et y être re-compacté pour prendre un ascenseur et être logé par exemple dans un bureau, vu son encombrement réduit. Mais ce type de véhicule pourrait aussi avoir d'autres usages plus spécifiques, comme véhicule et caddie sur un terrain de golf, ou pour la promenade touristique, etc... Enfin, si il est choisi de le mouvoir exclusivement par la force musculaire de l'utilisateur, il n'entraînerait évidemment aucune pollution, alors que son poids resterait limité du fait de l'absence de batteries. Bien entendu si dans une configuration moins favorable il est équipé d'un ou plusieurs moteurs électriques pour soulager ou remplacer l'effort de l'utilisateur l'avantage du poids limité perd de sa pertinence mais n'exclut pas que le véhicule conserve son caractère compact ou pliable pour peu que le choix du ou des moteurs et des batteries se porte sur des modèles eux-mêmes compacts, l'architecture avantageuse du véhicule selon l'invention étant par ailleurs pour le reste conservée. Un propulseur selon le préambule de la revendication 1 est divulgué par le document US 2003/042059 A1. Chacun des documents US 2009/315294 A1, DE 10209093 A1 et WO 00/05127 A1 divulgue un véhicule individuel à trois roues.

Un objet de la présente invention est de proposer un véhicule individuel ne présentant pas, ou peu, au moins l'un des inconvénients présentés ci-dessus.

En outre, une limitation particulière rencontrée dans la conception des modèles existants de bicyclettes pliantes de faible encombrement vient de leur mode de propulsion (le mode classique à pédalier et chaîne) et à leur dispositif de changement de vitesse (dérailleur). Car plus on cherche à réduire l'encombrement global du modèle en réduisant le diamètre de ses roues, plus il faut en compensation augmenter la taille de son pédalier, de sorte qu'il devient impossible, dans ces conditions, de réduire cet encombrement en dessous d'un seuil limite.

Ce point pourra être mieux compris à partir d'ordres de grandeurs concrets.

Avec une roue motrice dont le diamètre est réduit à 20 cm environ (ou 8 pouces), un tour de roue par seconde donne au véhicule la vitesse de 2,26 km/heure. Il faut donc 6 tours de roue par seconde pour atteindre un objectif de vitesse de 2,26 x 6 = 13,6 km/heure. Avec un propulseur classique à pédalier, si cette vitesse est obtenue à la cadence d'un tour de pédalier par seconde, et si le pignon de chaîne entraînant la roue comporte 12 dents (valeur usuelle), le pédalier doit comporter 6 x 12 = 72 dents. Avec une chaîne formée de maillons de 12,7 mm, valeur courante, ce pédalier aurait un diamètre de 29 cm, soit à peu près une fois et demie celui des roues : le gain de taille par réduction du diamètre des roues se perd en augmentation de taille du pédalier.

Pour ce qui est du dérailleur, il participe lui aussi à augmenter l'encombrement de l'ensemble, en créant en outre des difficultés d'enchevêtrement en cas de proximité d'une autre bicyclette, par interpénétration avec certains éléments de celle-ci (pédales, poignées de frein, guidon).

On connaît aussi des véhicules comportant seulement deux roues motrices et directrices, et où le passager contrôle son équilibre en se penchant vers l'avant pour provoquer l'accélération du véhicule et vers l'arrière pour provoquer sa décélération. Ces véhicules virent lorsqu'est créée une différence de vitesse de rotation entre les deux roues. Ces véhicules ne comportent pas de troisième roue formant un polygone de sustentation mais nécessitent des roues d'un diamètre important et une propulsion électrique qui exige elle-même des batteries et des moteurs lourds et encombrants rendant difficile leur rangement dans un coffre de voiture ou la manipulation dans un immeuble comme bagage tracté.

Pour pallier ces différents inconvénients, l'invention propose un véhicule individuel à roues caractérisé en ce qu'il comporte un bâti en forme de T inversé, comportant au moins deux roues motrices et directrices, chacune munie d'un frein, disposées respectivement aux extrémités de la branche transversale du T et d'une commande de direction et de freinage disposée dans la partie supérieure de la branche centrale du T, une roulette agencée pour s'orienter librement portée par un support de roulette , ladite roulette étant désaxée par rapport aux roues motrices et directrices et formant avec ces dernières le polygone de sustentation du véhicule, au moins un support pour le passager, ledit support étant placé à la verticale dudit polygone de sustentation, un dispositif de propulsion agencé pour entraîner en rotation lesdites roues, un dispositif apte à créer un différentiel de vitesse entre les deux roues.

Cette configuration assure au véhicule un polygone d'appui procurant une grande stabilité et ce en dépit d'une taille très réduite de l'ensemble et notamment des roues. Le fait d'avoir trois points d'appuis permet en effet de se passer de tout effet inertiel ou gyroscopique pour assurer la stabilité de l'ensemble, même à l'arrêt.

Grâce à ces dispositions, le véhicule acquiert en outre une bonne stabilité en virage, du fait que seule la différence de vitesse entre les deux roues est pilotée, l'orientation du véhicule n'est que la conséquence du virage produit par la différence de vitesse.

Le support du passager selon l'invention consiste en des palettes du propulseur.

Selon un mode de réalisation du véhicule selon l'invention la roulette est montée sur un support de roulette agencé de sorte qu'en position de roulage, ladite roulette fournisse un appui roulant de stabilisation, ladite roulette étant en outre escamotable, de sorte à permettre un encombrement réduit du véhicule dans une position escamotée.

Dans un mode préférentiel de réalisation de l'invention dans laquelle la branche centrale du bâti est sensiblement verticale ledit support de roulette comporte une poutre dont une première extrémité est montée mobile en translation le long de la dite branche centrale du bâti, une poutrelle montée articulée à l'extrémité inférieure de la branche centrale du bâti d'une part, et sensiblement au milieu de la poutre d'autre part, et la roulette est fixée à une seconde extrémité de ladite poutre par le moyen d'un axe d'articulation maintenu sensiblement vertical par le moyen de deux bras orienteurs montés articulés entre ledit axe d'articulation et ladite poutrelle. De manière optionnelle la partie supérieure de la branche verticale du T est pliable et/ou escamotable, et la hauteur de la poignée est réglable.

La propulsion est assurée par un propulseur compact avec un fort rapport multiplicateur actionné par les jambes du passager. Un autre objet de la présente invention est de proposer un tel propulseur avec un changement de vitesse avec une variation continue. Selon d'autres caractéristiques
- ledit véhicule peut comporter un dispositif de virage, chaque roue être munie d'un frein, et ledit différentiel mécanique être conçu pilotable entre une position activée débloquée, dans laquelle un ralentissement de l'une des roues produit en réaction une accélération de même ordre de l'autre roue, et une position désactivée dans laquelle les deux roues sont indépendantes l'une de l'autre et libres en rotation; une telle disposition permet de produire un virage par un freinage directionnel appliqué à une seule roue et permet la manipulation aisée du véhicule tiré derrière soi lorsqu'il n'est pas conduit,
- ledit différentiel peut comporter en outre une position activée bloquée, dans laquelle les roues sont solidaires et tournent à la même vitesse, permettant de maintenir une trajectoire rectiligne imposée, utile en roulage en pente, ou pour passer de petits obstacles sur l'une des deux roues,
- ledit véhicule peut comporter en outre pour chaque roue un ensemble comprenant un frein, un piston de frein, logé dans un cylindre de frein et un levier de manoeuvre dudit piston de frein, chacun desdits ensembles comportant un axe d'articulation autour duquel un mouvement du levier de manoeuvre par rapport au cylindre de frein produit un déplacement du piston de frein dans ledit cylindre de frein, les deux cylindres de frein et les deux leviers de manoeuvre sont déplaçables en rotation autour de leurs axes d'articulation respectifs qui dans un mode préférentiel de réalisation de l'invention coïncident en un même axe, à partir d'une position de repos en butée, dans un sens pour lesdits deux leviers de manoeuvre et dans le sens opposé pour lesdits deux cylindres de frein,
- en outre les dits pistons de frein ou lesdits cylindres de frein peuvent être rendus solidaires par une pièce de liaison, une manoeuvre d'une commande vers une position de virage à gauche, respectivement à droite, provoquant le déplacement d'un cylindre de frein par rapport à un piston de frein associé à la roue de gauche, respectivement de droite, et donc le freinage directionnel de ladite roue en vue d'effectuer un virage à gauche, respectivement à droite, si le différentiel est débloqué et une autre manoeuvre de la commande vers une position de freinage global provoquant, par l'intermédiaire de la pièce de liaison, le déplacement simultané et de même amplitude des deux cylindres de frein par rapport aux deux pistons de frein en vue d'un freinage de même intensité sur les deux roues. Cette disposition permet de rendre le freinage global (ou bilatéral) et le freinage directionnel (ou unilatéral) totalement indépendants l'un de l'autre et en même temps superposables ; ainsi les deux manoeuvres de la commande peuvent être simultanées pour aboutir à freiner le véhicule et à le faire virer en même temps si le différentiel est débloqué.
- le dispositif de virage peut comporter une tige servant d'axe de rotation de la poignée de commande et munie d'un méplat permettant son accouplement avec un organe d'actionnement du freinage directionnel, et la manoeuvre de la poignée vers sa position de virage à gauche, respectivement à droite, peut être une rotation de ladite poignée à gauche, respectivement à droite, proposant ainsi un mécanisme fiable et robuste,
- la manoeuvre de la poignée vers sa position de virage à gauche, respectivement à droite, peut provoquer l'approche d'un galet vers une face inclinée dudit levier de manoeuvre, de sorte à provoquer le relèvement dudit levier de manoeuvre, permettant ainsi une manoeuvre avec peu de frottements,
- la roulette sustentatrice décalée de l'axe des roues et fournissant un appui roulant de stabilisation peut être escamotable, de sorte à permettre un encombrement réduit du véhicule dans une position escamotée, ledit véhicule peut comporter une poutre dont une première extrémité est montée mobile en translation le long de la branche centrale, une poutrelle montée articulée à l'extrémité inférieure de la branche centrale d'une part et à la poutre, préférentiellement sensiblement en son milieu, d'autre part, et ladite roulette être fixée à une seconde extrémité de ladite poutre par le moyen d'un axe articulé maintenu vertical, ou sensiblement vertical, par le moyen de deux bras orienteurs montés articulés entre ledit axe d'articulation et ladite poutrelle ; par ces dispositions la roulette constitue un appui à la fois en circulation et en position escamotée, permettant au véhicule plié de tenir debout de manière stable dans ces deux configurations,
- ledit véhicule peut comporter une tige actionnée automatiquement par l'escamotage de ladite roulette, et provoquant le passage du différentiel en position désactivée, permettant ainsi de tirer le véhicule plié derrière soi sans contrainte dans les virages,
- ledit différentiel peut comporter deux pignons de roue dont chacun est solidaire de l'une des roues en lui étant coaxial et un pignon planétaire à axe perpendiculaire à l'axe des roues, engrenant sur les deux pignons de roue, ledit pignon planétaire étant bloqué en rotation autour de son axe propre en position activée bloquée, libre en rotation en position activée débloquée, et écarté des deux pignons de roue de sorte à ne plus engrener en position désactivée, proposant ainsi un dispositif fiable de différentiel pilotable,
- ledit pignon planétaire peut comporter une portée cylindrique et ledit différentiel comporter au moins un, de préférence deux, galets de blocage aptes à appuyer sur ladite portée cylindrique de sorte à bloquer en rotation par coincement ledit pignon planétaire, et une palette pivotante agencée pour repousser ledit galet de blocage de sorte qu'il ne bloque plus ledit pignon planétaire suite à une manoeuvre de la poignée de commande vers une position de virage, ce qui permet un déblocage par un mécanisme compact et fiable,
- ledit différentiel peut comporter une, de préférence deux, came de désactivation agencée pour éloigner ledit pignon planétaire de l'axe de rotation des roues de sorte qu'il n'engrène plus sur les pignons de roue, suite à l'escamotage de la roulette actionnant ladite tige, constituant là encore un mécanisme compact et fiable,
- ledit véhicule peut comporter une selle montée sur la branche centrale du bâti, permettant à l'usager de soulager l'appui sur ses jambes, ce qui est confortable lorsque l'effort à fournir sur les palettes 1 et 2 est faible, notamment en ligne droite sur le plat.

L'avantage apporté par la présente invention réside principalement en ce qu'elle propose un véhicule permettant un roulage fiable et confortable, et une configuration de pliage peu encombrante et dépourvue de pièces risquant de s'accrocher à d'autres objets.

La présente invention propose un propulseur selon la revendication indépendante 1, comportant deux palettes à actionnement alterné, par exemple par des appuis exercés par l'un puis l'autre des deux pieds d'un utilisateur, chacune des palettes entrainant un levier oscillant mobile en rotation autour d'un axe d'oscillation par action sur une première extrémité dudit levier oscillant. Ce propulseur est particulier en ce qu'il comporte un module redresseur de sens comportant deux roues libres actionnées, chacune dans son sens entrainant, par l'action sur l'une desdites palettes, et couplées de telle sorte que ladite roue motrice soit entrainée toujours dans le même sens quelle que soit la palette actionnée. Grâce à ces dispositions, l'utilisateur peut actionner, en les abaissant, chacune des palettes à tour de rôle, un dispositif annexe (une chaine ouverte) assurant la remontée en retour de la palette non actionnée. Un tel propulseur peut être utilisé sur un tricycle selon l'invention, mais également sur tout véhicule mu à partir d'appuis ou actions alternées. Le terme « palette » doit être compris comme une pièce sur laquelle l'utilisateur peut appuyer, ce peut être un levier, une pédale, ou une palette telle qu'utilisée sur des harmoniums ou machines à coudre mécaniques.

Selon d'autres caractéristiques
- chaque palette peut être reliée audit levier oscillant par l'intermédiaire d'une manivelle primaire montée articulée à la première extrémité dudit levier oscillant et appuyée en position de fonctionnement sur une manivelle auxiliaire montée articulée sur ladite manivelle primaire et ledit propulseur peut comporter en outre pour chaque palette une chaine ouverte auxiliaire reliant le levier oscillant à la palette en s'appuyant sur un pignon auxiliaire solidaire d'un bâti du véhicule, de sorte à permettre un maintien de la palette dans une position proche de l'horizontale pendant son actionnement,
- les manivelles auxiliaires et les palettes peuvent être relevables en créant un écart angulaire entre les manivelles primaires et auxiliaires, celles-ci s'appuyant en butée, en position de travail, sur les dites manivelles primaires, permettant un encombrement réduit en position escamotée,
- ledit propulseur peut comporter en outre une chaine ouverte, dont les extrémités sont attachées à chacune des deuxièmes extrémités de l'un desdits leviers oscillants, et comprenant deux brins parallèles disposés entre chacune des extrémités et un pignon à double denture lui-même solidaire d'un plateau denté, et un brin transversal reliant les deux dentures dudit pignon double en passant par un pignon de renvoi ; une telle disposition permet d'une part d'assurer le retour de la palette non actionnée, tout en appliquant les efforts important d'actionnement toujours sur un brin parallèle, le brin transversal se contentant de reprendre les efforts plus limités de retour de palette ; par ailleurs une telle disposition permet un encombrement latéral réduit,
- ledit module redresseur peut comporter une chaine fermée reliant ledit plateau denté à deux pignons de sorte à les faire tourner tous les deux dans le même sens, pignons sur chacun desquels est montée une roue libre active dans un sens pour le premier pignon, et dans le sens opposé pour le deuxième pignon, et la première roue libre porte une roue dentée de sortie du redresseur agencée pour entrainer en rotation une autre roue dite d'entrée du différentiel, la deuxième roue libre portant une roue d'engrenage identique à la roue de sortie et engrenant sur celle-ci de sorte que la roue dentée de sortie du redresseur tourne toujours dans le même sens quelle que soit la palette qui travaille,
- selon l'invention, le propulseur comprend en outre un module variateur, comportant un moyen de translation dudit axe d'oscillation dans une lumière longitudinale de chacun desdits leviers oscillants, de sorte à modifier le bras de levier desdits leviers oscillants ; une telle disposition permet une variation continue du rapport multiplicateur du module variateur,
- ledit moyen de translation peut comporter d'une part un dispositif de blocage de position de l'axe d'oscillation comportant deux galets de blocage agissant chacun dans un sens par coincement d'un traineau solidaire de l'axe d'oscillation sur un guide fixé au bâti du véhicule, ce coincement ayant pour effet de fixer l'axe d'oscillation par rapport audit bâti, d'autre part une crémaillère de commande entrainée par un pignon de manette lui-même solidaire d'une manette de variation de vitesse, et munie de deux ergots agencés pour pousser chacun l'un des galets de blocage selon le sens dans lequel la crémaillère de commande est entrainée, et d'un ergot agencé pour pousser ledit traineau dès que le galet est débloqué; un tel dispositif, dit « irréversible » du fait que seule une action sur la manette peut déplacer l'axe d'oscillation, lequel reste insensible aux poussées exercées sur lui par les leviers,
- ledit propulseur peut comporter deux crémaillères de positionnement fixées au bâti dudit véhicule, et chaque extrémité de l'axe d'oscillation être munie d'un pignon engrenant sur l'une desdites crémaillères de positionnement, de sorte à maintenir fixe l'orientation de l'axe d'oscillation par rapport audit bâti ; une telle disposition permet de maintenir bien orienté l'axe d'oscillation quels que soient les efforts appliqués sur lui.

Un autre avantage apporté par la présente invention réside en ce qu'elle propose un propulseur continu à palettes actionné à partir d'appuis discontinus de sens alternés, avec un confort d'utilisation amélioré, et dans des modes de réalisation préférés, une variation de vitesse continue.

Le pilotage du véhicule selon l'invention, lorsqu'il est propulsé mécaniquement par son passager et doté d'un dispositif de variation continue de vitesse, comporte trois commandes : une pour le virage, une pour le freinage et une pour la variation de vitesse.

La commande de virage doit provoquer d'abord le passage du différentiel en position débloquée et ensuite l'actionnement du frein d'une seule roue, celle située du côté de l'intérieur du virage, pour produire, en coopération avec le différentiel, un freinage unilatéral directionnel. La commande de freinage global doit provoquer un freinage bilatéral d'égale intensité sur les deux roues. Ces deux commandes de virage et de freinage doivent être indépendantes pour pouvoir être actionnées simultanément ou non. Leur application simultanée pour virer et freiner en même temps doit provoquer un freinage simultané sur les deux roues mais d'inégale intensité sur chacune d'elles. On sait que l'actionnement d'un freinage implique le déplacement relatif d'un levier de frein par rapport à un élément de base qui lui est associé, cet élément de base étant généralement fixe alors que le levier est seul déplaçable.

Dans le dispositif selon l'invention combinant un freinage unilatéral et un freinage bilatéral, les éléments de base sont rendus déplaçables comme le sont normalement les leviers, dans un montage où leviers et éléments de base sont articulés autour d'un même axe. Un même freinage peut alors être obtenu en déplaçant angulairement autour de son axe et à partir de sa position de repos où il est appuyé en butée, soit un levier déplacé dans un sens, soit l'élément de base associé, déplacé du même angle mais dans l'autre sens. Une telle disposition permet de provoquer un freinage unilatéral en déplaçant alors un seul levier (celui qui convient pour obtenir l'effet directionnel attendu) par l'application de la commande de virage, et de provoquer un freinage global en déplaçant ensemble les deux éléments de base par l'application de la commande de freinage. L'application simultanée de ces deux commandes permet de superposer ces deux effets et donc de virer et freiner en même temps, sans interaction entre ces deux opérations.

La chaine cinématique reliant la commande aux freins peut être assurée par divers moyens connus de l'homme du métier tels que par exemple câbles, tringles ou encore systèmes utilisant du liquide de frein coopérant avec des pistons.

Selon une configuration préférentielle de l'invention :
- le véhicule individuel est pliable et comporte deux roues motrices et directrices, au moins une roulette située en position décalée par rapport aux points d'appui au sol des deux roues de manière à constituer un polygone de sustentation stable du véhicule et rendue librement orientable en étant montée folle en rotation autour d'un axe sensiblement perpendiculaire au plan de sustentation, un dispositif de propulsion agencé pour entrainer en rotation les deux roues, un dispositif différentiel agencé apte à créer un différentiel de vitesse entre les deux roues de sorte à faire virer le véhicule et un support de la roulette agencé pour permettre le rapprochement de ladite roulette de l'axe des roues pour replier le véhicule en configuration compactée,
- l'énergie motrice actionnant le dispositif de propulsion est produite mécaniquement par des appuis alternés exercés par un utilisateur sur l'une et l'autre de deux palettes, lesdits appuis provoquant un entraînement des roues par l'intermédiaire d'une chaîne cinématique entièrement mécanique, et le dispositif directionnel créant le différentiel de vitesse entre les deux roues est constitués par un différentiel mécanique pilotable relié en amont au propulseur et en aval aux deux roues et pouvant être mis dans trois états distincts, à savoir un état bloqué dans lequel les deux roues tournent à la même vitesse pour imposer au véhicule une trajectoire rectiligne, un état débloqué dans lequel les deux roues peuvent tourner à des vitesse différentes pour faire virer le véhicule lorsqu'un freinage appliqué sur l'une des roues par un dispositif de virage et freinage entraine par le jeu du différentiel débloqué une accélération de l'autre roue produisant ainsi un effet directionnel, et un état désactivé dans lequel chaque roue est libre de tourner indépendamment de l'autre pour permettre à l'utilisateur de faire rouler le véhicule comme un bagage lorsque ledit véhicule est replié en configuration compactée,

- un dispositif de virage et freinage comporte un dispositif d'actionnement unilatéral de chacun des freins des roues et un dispositif d'actionnement bilatéral de chacun desdits freins des roues, lesdits deux dispositifs pouvant être commandés séparément et étant agencés aptes à ce que leurs effets se superposent lorsqu'ils sont commandés simultanément,
- le dispositif d'actionnement bilatéral freine chacune des roues avec la même intensité, alors que le dispositif d'actionnement unilatéral permet d'obtenir un freinage différencié de chacune des roues,
- le dispositif d'actionnement unilatéral du frein de chacune des roues comprend un piston de frein logé dans un cylindre de frein et un levier de manoeuvre dudit piston de frein, les dits deux cylindres de frein et les dits deux leviers de manoeuvre étant agencés déplaçables en rotation autour de leurs axes d'articulation respectifs, à partir d'une position de repos en butée, dans un sens pour lesdits deux leviers de manoeuvre et dans le sens opposé pour lesdits deux cylindres de frein ; un mouvement du levier de manoeuvre dudit piston de frein par rapport au cylindre de frein produisant un déplacement dudit piston de frein dans ledit cylindre de frein qui lui correspond et par là un déplacement du fluide hydraulique vers l'étrier de frein associé,
- le dispositif d'actionnement bilatéral du frein de chacune des roues comprend en outre d'une part, un axe unique autour duquel sont agencés les dits levier de manoeuvre et les dits cylindres de frein et d'autre part, une pièce couplant les dits cylindres de frein l'un à l'autre.

La présente invention sera mieux comprise à la lecture de la description détaillée d'un exemple de réalisation qui suit faite en référence aux figures annexées dans lesquelles
- la figure 1 est une vue en perspective avant d'un véhicule de type tricycle selon l'invention,
- la figure 2 est une vue en perspective arrière du véhicule tricycle de la fig. 1
- la figure 3 est une vue du véhicule tricycle de la fig. 1 en position repliée
- la figure 4 est une vue arrière du véhicule tricycle de la fig. 1 en transparence du bâti,
- la figure 5 est une vue avant du véhicule tricycle de la fig. 1 en transparence du bâti,
- la figure 6 est une vue d'un propulseur du véhicule tricycle de la fig. 1
- les figures 7, 9 et 10 sont une vue du module variateur du propulseur de la fig. 6
- la figure 8 est une vue d'un détail du module variateur du propulseur de la fig. 6
- la figure 11 est une vue d'un module redresseur du propulseur de la fig. 6
- la figure 12 est une vue du module redresseur de la fig. 11 et d'une chaine
- la figure 13 est une vue d'un différentiel pilotable du véhicule tricycle de la fig. 1
- la figure 14 est une vue en transparence du différentiel de la fig. 13 en position activée
- la figure 15 est une vue en transparence du différentiel de la fig. 13 en position désactivée
- la figure 16 est une vue d'une poignée de commande du véhicule tricycle de la fig. 1
- la figure 17 est une vue d'un module de freinage global et directionnel du véhicule tricycle de la fig. 1
- la figure 18 est une vue d'un support repliable d'une roulette du véhicule tricycle de la fig. 1.
- les figures 19 détaillent les dispositifs d'actionnement des freins

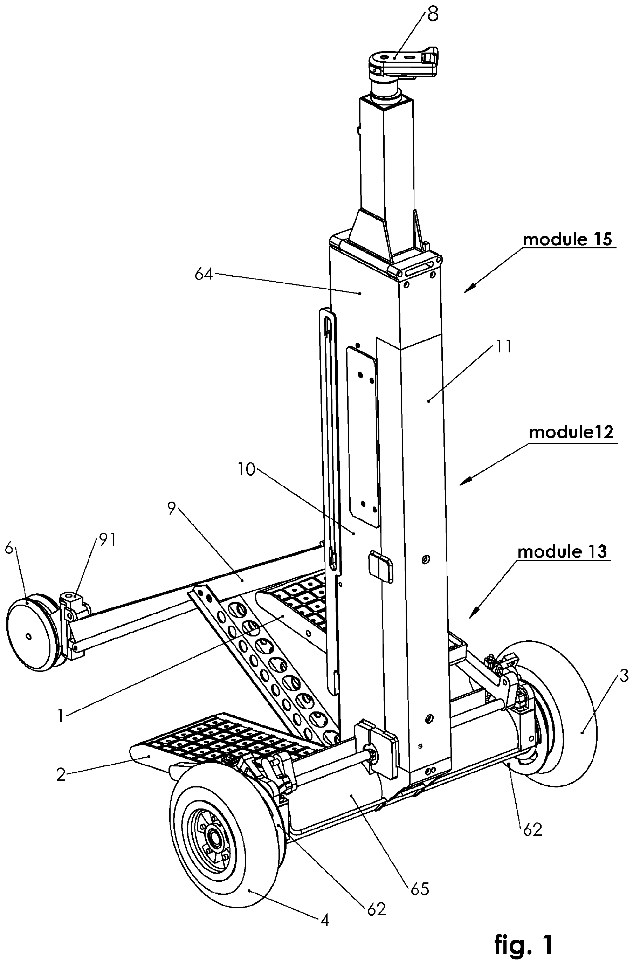

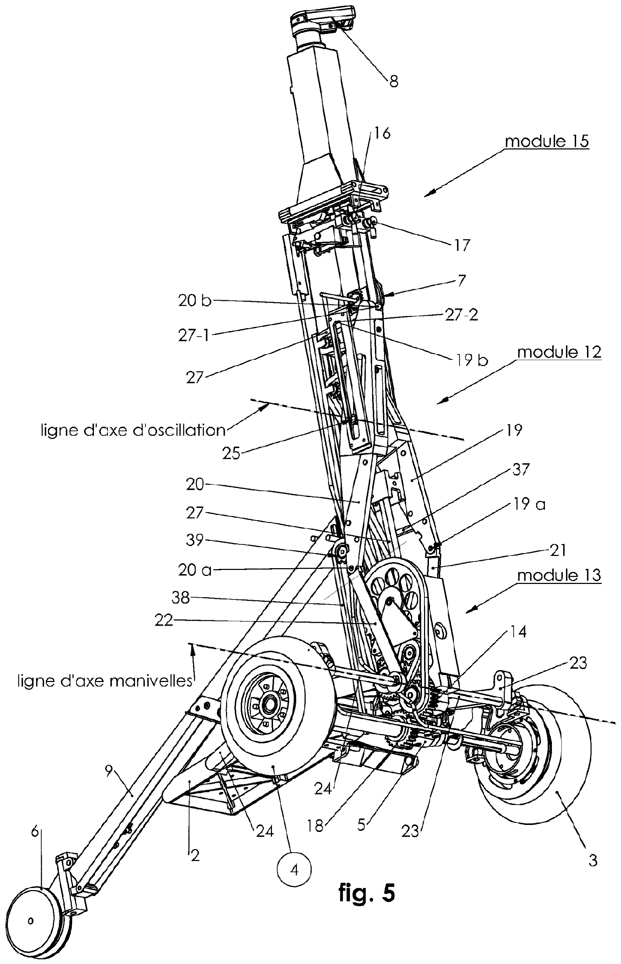

La description qui suit est faite avec l'exemple représenté dans les fig. 1 à 19 mais n'en limite aucunement la portée, qui est définie dans les revendications.

Le véhicule de type tricycle selon le mode de réalisation préférée de l'invention est destiné au transport individuel humain et propulsé par la force musculaire d'un passager embarqué le plus souvent en position debout ou sensiblement debout lui permettant de prendre appui sur ses jambes, en ayant les pieds posés sur deux palettes 1, 2 mobiles verticalement selon des mouvements inversés, la descente d'une palette 1, 2 provoquant la remontée de l'autre et inversement. La propulsion est assurée par l'application alternée du poids du passager sur l'une puis l'autre des deux palettes 1 et 2 pour provoquer la descente de la palette 1, 2 en appui, l'amplitude de cette descente pouvant varier jusqu'à une limite supérieure correspondant à un appui de palette dit « complet », des appuis de moindre amplitude, dits « partiels », étant possibles. Le véhicule comporte à l'avant deux roues motrices et directrices 3 et 4, non orientables mais associées à un différentiel pilotable 5 permettant à ces roues 3, 4 soit de tourner à la même vitesse pour suivre une trajectoire rectiligne (différentiel 5 activé bloqué), soit de tourner à des vitesses différentes, la différence des vitesses étant contrôlée par un dispositif de virage pour décrire une trajectoire incurvée (différentiel 5 activé débloqué), soit encore d'être désolidarisées l'une et l'autre du dispositif de propulsion (différentiel 5 désactivé) pour permettre au passager débarqué de tirer derrière lui le véhicule en tant que bagage roulant sur les deux roues 3 et 4 devenues indépendantes. Une roulette 6 disposée à l'arrière est simplement sustentatrice et montée folle sur une articulation 91 maintenue sensiblement perpendiculaire au plan de sustentation.

Ledit véhicule comporte en outre une poignée de commande 8 combinée et rétractable. Cette poignée de commande 8 permet d'une part d'effectuer un freinage général simultané des deux roues 3, 4, d'autre part d'effectuer un freinage différentiel de l'une ou l'autre roue 3, 4. Ce freinage différentiel produit un effet directionnel, en freinant une roue 3, 4 de façon préférentielle. Son actionnement produit tout d'abord le déblocage du différentiel 5, pour permettre une vitesse différente des deux roues 3, 4. Il peut se superposer au freinage général pour obtenir un effet de ralentissement pendant un virage.

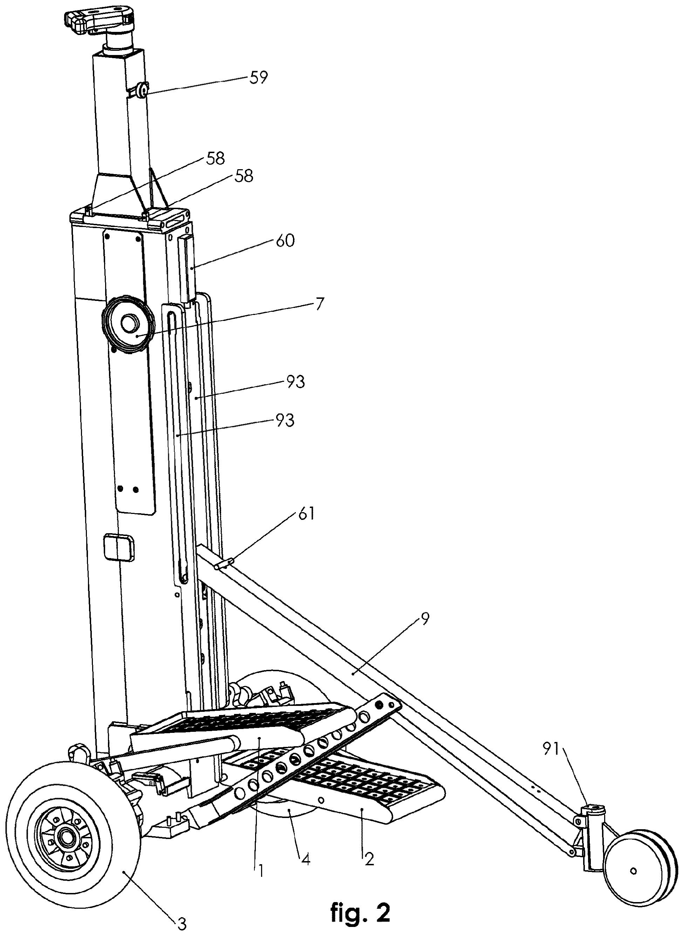

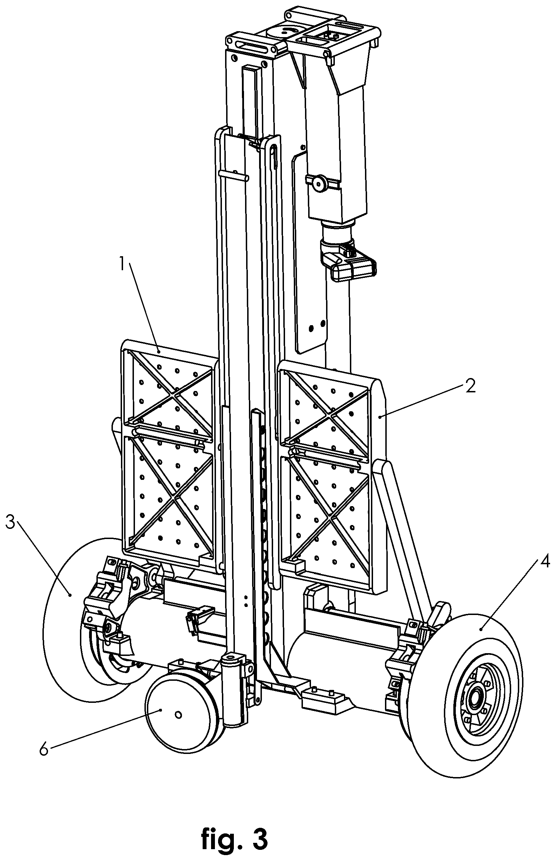

Ladite roulette 6 dudit véhicule est montée à l'arrière sur un support repliable 9 pour permettre le passage du véhicule de sa configuration de route (fig. 1, 2), à une configuration compactée (fig. 3).

Tous les organes mécaniques du véhicule - hormis les palettes 1 et 2 et le support repliable 9 de roulette arrière 6 - ainsi que les câbles ou durites de commande sont confinés à l'intérieur d'un bâti compact 10 muni d'un couvercle de bâti 11 en vue de protéger ces éléments et en même temps de prévenir tout risque d'enchevêtrement du véhicule avec des objets voisins.

La fig. 3 montre le véhicule dans sa configuration compactée, dans laquelle non seulement le support 9 est replié, mais aussi les palettes 1 et 2 sont relevées et le bloc supérieur portant la poignée de commande 8 est replié le long du véhicule pour en réduire encore l'encombrement pour par exemple un rangement dans un coffre de voiture. Des poussoirs de déblocage 58 sont disposés à cet effet sur le dessus de la partie repliable du bâti 10. Avantageusement, la poignée de commande 8 elle-même se trouve placée à l'extrémité d'un tube support qui est rétractable à l'intérieur du corps du bloc supérieur, pour permettre à l'utilisateur embarqué de régler à sa meilleure convenance, entre deux limites, la hauteur de la poignée 8, un bouton de blocage 59 permettant son maintien à la hauteur voulue.

Le développement dudit véhicule - défini comme la distance parcourue par le véhicule pour un appui complet de palette - est réglable de manière continue entre deux limites selon la position donnée à une manette de commande 7, ce afin de faciliter la montée de pentes plus ou moins fortes. Avec ce type de propulsion, l'effort fourni par le passager est proche de celui développé pour monter une échelle verticale ou un escalier. En effet, lorsque le véhicule propulsé avance sur le sol, le passager embarqué, qui avance à la même vitesse que le véhicule, reste donc immobile par rapport à ce dernier, et lorsque un appui commence sur une palette 1, 2, celle-ci s'enfonce alors que l'autre palette 2, 1 s'élève et la dépasse bientôt en hauteur, ce qui permet au passager de « monter » ensuite sur cette autre palette 2, 1 devenue la plus haute, et ainsi de suite. Chaque nouvel appui constitue donc l'équivalent de la montée d'un barreau à l'autre sur une échelle verticale, ou encore de la montée d'une marche d'escalier, la hauteur de cette marche variant selon le moment où le passager décide de changer d'appui, dans la limite de l'appui complet évoqué plus haut.

Lorsque le véhicule, préalablement lancé, roule en ligne droite et à vitesse constante sur un sol horizontal, l'énergie à fournir pour entretenir son mouvement est faible puisqu'elle ne doit équilibrer que les résistances au roulement, et le passager n'a donc à produire que très peu d'effort, et il a intérêt à le faire en choisissant le développement maximum et en faisant une succession d'appuis partiels courts, ce qui ressemble alors à des marches d'escalier de faible hauteur. Le passager peut alors être embarqué en position debout, ou assise dans le cas d'un véhicule doté d'un siège. Toujours sur un sol horizontal et à vitesse linéaire constante mais en trajectoire courbe, le passager est soumis à la force centrifuge qu'il doit équilibrer en se penchant légèrement vers l'intérieur du virage effectué. En fait, le guidage du véhicule en courbe s'effectue en se penchant d'abord du côté où l'on veut virer et en rétablissant son équilibre par un freinage différentiel approprié qui produit une courbure de la trajectoire et crée donc la force centrifuge d'équilibrage nécessaire. La position debout, sans être obligatoire, est la meilleure pour un tel guidage. Dans les phases de forte accélération et décélération du véhicule, ce qui vient d'être dit pour la force centrifuge s'applique pour la force d'inertie, de sorte que le passager doit, pour maintenir son équilibre, se pencher - plus ou moins légèrement selon les accélérations provoquées - vers l'avant pour accélérer et vers l'arrière pour freiner, et par conséquent la position debout est préférable pour donner plus de fluidité à ces évolutions. Ce type de pilotage reste simple par rapport à celui de nombreux autres matériels couramment répandus, généralement utilisés pour les loisirs, matériels roulants ou glissants.

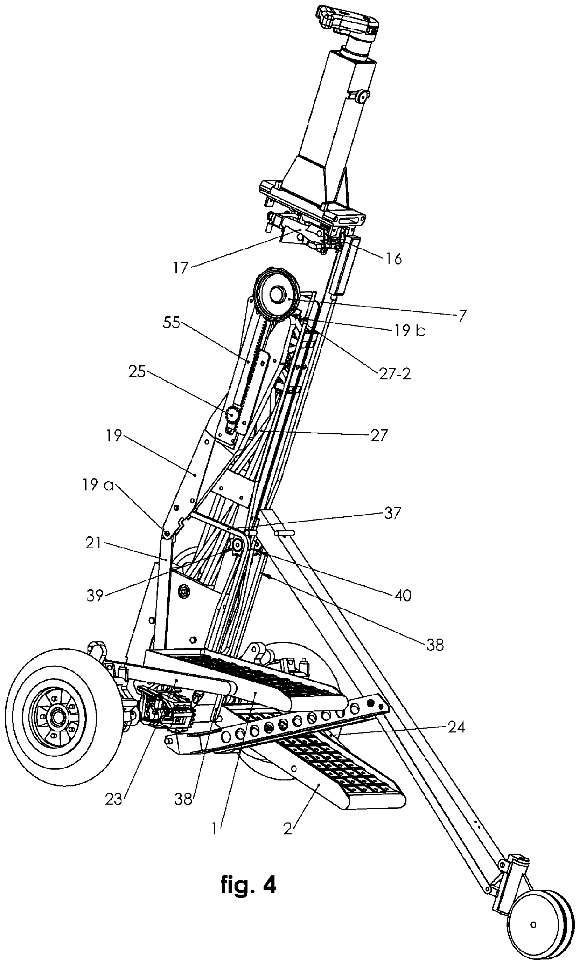

Le véhicule objet de l'invention comprend un bâti 10 en forme de Té (fig. 1 et 2) dont la branche centrale 64, disposée sensiblement verticalement en position de fonctionnement, contient (fig. 4 à 8) :
i). dans sa partie médiane un module variateur 12 dont les éléments se meuvent dans des sens alternés selon que l'appui se fait sur l'une ou l'autre des deux palettes 1 et 2 et dans sa partie inférieure un module redresseur de sens 13 comportant deux roues libres 13-1 et 13-2 couplées de telle sorte qu'une roue dentée de sortie 14 est toujours entraînée dans le même sens, quelle que soit la palette 1, 2 en appui.
ii). dans sa partie supérieure un module de freinage bilatéral et unilatéral 15 regroupant les éléments associés à la poignée 8 de commande de freinage, de direction, et de pilotage du différentiel 5, dont en particulier les cylindres 16-1 et 17-1 des pistons 16 et 17 de deux freins à disques dont les disques 62 sont associés aux deux roues 3 et 4.

La branche transversale 65 du bâti 10 est disposée horizontalement en position normale de fonctionnement du véhicule. On y a logé deux demi-arbres entraînant les roues 3 et 4 ainsi que le différentiel pilotable 5 auquel ces demi-arbres sont reliés, lequel différentiel 5 comporte une roue d'entrainement 18 coopérant par engrènement avec la roue dentée de sortie 14.

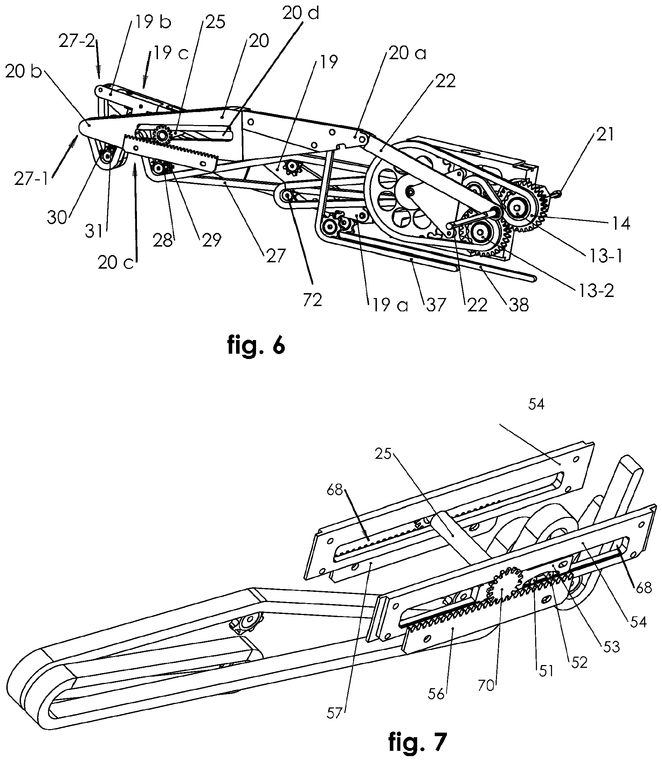

Le module variateur 12 comporte deux leviers oscillants 19 et 20 reliés en leurs premières extrémités 19a et 20a respectivement aux manivelles 21 et 22, elles-mêmes mues par les palettes 1 et 2 par l'intermédiaire de manivelles auxiliaires relevables 23 et 24 permettant de relever les palettes 1 et 2 dans la configuration compactée du véhicule. Ces deux leviers oscillants 19 et 20 oscillent autour d'un même axe d'oscillation 25. Ledit axe d'oscillation 25 est disposé mobile en translation dans une lumière 68 (cf fig.7). Ainsi la distance entre ledit axe d'oscillation 25 et les extrémités 19a et 20a des leviers oscillants 19, 20 est variable, de sorte que le débattement des secondes extrémités 19b et 20b de ces leviers oscillants 19, 20 est d'autant plus faible que la distance entre l'axe d'oscillation 25 et les extrémités 19a et 20a est grande et qu'en même temps la distance entre l'axe d'oscillation 25 et les extrémités 19b et 20b est petite, ce qui est exploité pour faire varier le développement du propulseur. La position de l'axe d'oscillation 25 est fixée par la position donnée à une manette de vitesse 7. Au cours d'une oscillation, le point de contact entre l'axe 25 fixe et le levier 19 (20) se déplace légèrement, provoquant un glissement supprimé par l'interposition de manchons cylindriques (non représentés) coaxiaux à l'axe 25 et qui tournent légèrement sur cet axe en étant entraînés par les leviers.

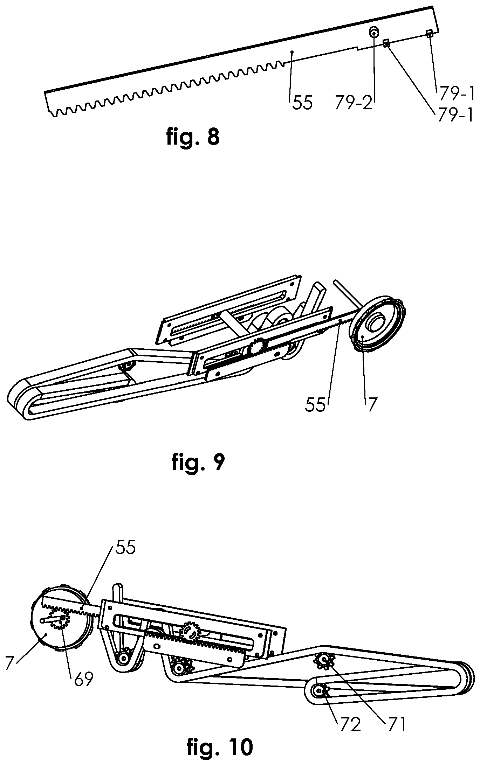

Lorsque les leviers oscillants 19 et 20 se déplacent, ils exercent une poussée - d'ailleurs évolutive tout au long d'un appui de pédale et changeant en particulier de sens - sur leur axe d'oscillation mobile 25, de sorte que pour que ce dernier reste en position fixe, il doit être maintenu bloqué dans les deux sens. Par contre, une action sur la manette 7 doit pouvoir déplacer l'axe 25, et être seule à pouvoir le faire. A cet effet le module variateur 12 comporte d'une part un dispositif de blocage de position de l'axe d'oscillation 25 comportant (cf fig. 7 et 8) deux galets de blocage 51 et 52 agissant par coincement sur un traineau 53 solidaire de l'axe d'oscillation 25 et sur un guide 54 fixé au bâti 10, ce coincement ayant donc pour effet de fixer l'axe d'oscillation 25 par rapport au bâti 10. Le module variateur 12 comporte d'autre part une crémaillère de commande 55 entrainée par un pignon 69 solidaire de la manette 7 (cf fig.9), cette crémaillère de commande 55 poussant d'abord l'un ou l'autre des deux galets de blocage 51, 52 à l'aide de l'un ou l'autre de deux ergots 79-1, puis le traineau à l'aide d'un ergot 79-2, lorsqu'est actionnée la manette 7, de manière à débloquer d'abord un galet de blocage 51, 52, et à entrainer ensuite le traineau 53 - et donc l'axe d'oscillation 25 - dans le sens ainsi débloqué, sens dans lequel l'autre galet 52, 51 n'est pas bloquant.

Un tel dispositif, dit « irréversible » du fait que seule une action sur la manette 7 puisse déplacer l'axe 25, lequel reste insensible aux poussées exercées par les leviers oscillants 19, 20, assure donc la fonction à remplir. Dans une réalisation préférée de l'invention représentée à la fig. 7, ce dispositif n'est présent que d'un côté de l'appareil, et pour que dans ces conditions l'axe d'oscillation 25 soit néanmoins déplacé tout en restant constamment perpendiculaire au plan médian du bâti 10 (cf. fig. 6), chaque extrémité de l'axe d'oscillation 25 est équipée d'un pignon 70 qui engrène sur l'une de deux crémaillères de positionnement 56 et 57 fixées au bâti 10, de telle sorte que lorsque l'axe d'oscillation 25 est déplacé d'un côté par le dispositif irréversible lié à la manette 7, il est entrainé en rotation par le pignon 70 qui roule sur la crémaillère 56 située du même côté que le dispositif irréversible, cette rotation déplaçant alors d'autant l'autre extrémité de l'axe d'oscillation 25, par le jeu de la crémaillère 57 et du pignon 70 situés de l'autre côté du bâti 10.

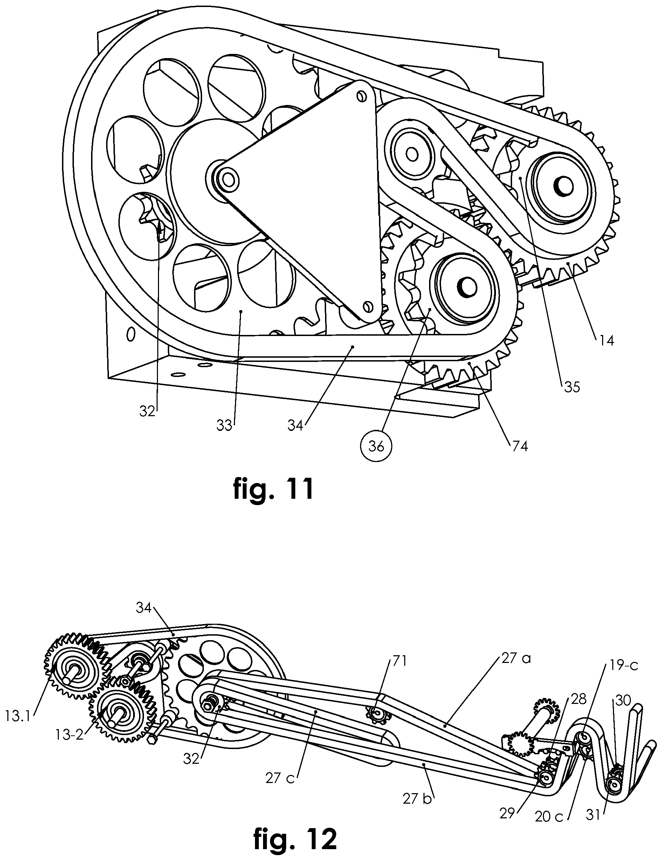

Le dispositif de propulsion comporte en outre une chaîne ouverte 27 de longueur fixe dont les extrémités 27-1 et 27-2 sont reliées respectivement aux secondes extrémités 19b et 20b des leviers oscillants 19, 20. Les brins de cette chaine s'enroulent d'une part autour de pignons 28, 29, 30, et 31 solidaires du bâti 10 et d'autre part autour de pignons auxiliaires 19c et 20c solidaires des leviers oscillants 19, 20, de manière à créer un mouflage associé à chaque levier oscillant 19, 20. La chaîne 27 coopère en outre avec un pignon à double denture 32 (fig. 11 et 12) du module redresseur 13. Un pignon de tension 71 et un pignon de renvoi 72 du brin de liaison 27 C (cf fig.12) complètent le mécanisme.

Du fait de ce montage, lorsque l'appui sur une palette 1, 2 provoque, par l'intermédiaire de la manivelle associée 21, 22, le mouvement de l'un des leviers oscillants 19, 20 et par là l'allongement des brins du mouflage où intervient ce levier oscillant 19, 20 d'un premier côté, les brins du mouflage situé de l'autre côté, où intervient l'autre levier oscillant 19, 20, se raccourcissent puisque la chaîne 27 est de longueur fixe, ce qui déplace cet autre levier oscillant 19, 20 et entraîne finalement la remontée de l'autre palette 2, 1. Plus le débattement des extrémités des leviers oscillants 19b et 20b est petit pour un appui complet de la palette, plus faible est la longueur de chaîne transférée ainsi d'un côté sur l'autre, et plus faible est la rotation angulaire du pignon double 32, et donc aussi le développement du dispositif de propulsion. L'utilisation de mouflages a pour but d'augmenter la longueur de chaîne transférée d'un côté sur l'autre lors d'un appui complet, et donc le développement maximum du véhicule lorsque l'axe d'oscillation 25 est rapproché le plus possible de l'axe des manivelles 21, 22.

Un dispositif redresseur de sens est nécessaire puisque les appuis moteurs sont discontinus et de sens alternés, alors que la roue dentée de sortie 14 doit toujours tourner dans le même sens pour que le véhicule soit entraîné en continu. La chaîne ouverte 27 entraîne en effet, dans des sens alternés, le pignon double 32 du module redresseur 13. Ce pignon double 32 est lié à un plateau 33 denté de grand diamètre (cf fig. 11) sur lequel s'enroule une chaîne fermée 34 qui est elle-même entraînée dans des sens alternés. Sur cette chaîne 34 engrènent deux pignons dentés 35 et 36, de plus petit diamètre, afin de profiter d'un effet amplificateur de vitesse de rotation, sur lesquels sont montées respectivement deux roues libres 13-1 et 13-2. Celles-ci sont montées dans des sens opposés, de sorte que si les pignons 35 et 36 sont entraînés ensemble dans un sens donné l'une des roues libres 13-1 et 13-2 est entraînante et l'autre ne l'est pas. La roue libre 13-1 porte extérieurement la roue dentée de sortie 14 qui est entraînée lorsque cette roue libre 13-1 est entraînante, alors que l'autre roue libre 13-2 porte une roue d'engrenage 74 identique à la roue dentée de sortie 14 et qui engrène avec cette dernière. Du fait de cet engrènement, les roues dentées de sortie 14 et d'engrenage 74 tournent donc toujours dans des sens opposés et à la même vitesse. Il en résulte que lorsque la roue dentée de sortie 14 est entraînée directement par la roue libre 13-1, la chaîne fermée 34 tournant dans le sens « direct », la roue libre 13-2, liée à la roue d'engrenage 74 tourne alors librement dans le sens non entraînant, alors qu'inversement lorsque cette roue libre 13-2 est entraînante, la chaîne fermée 34 tournant dans le sens « indirect », la roue dentée de sortie 14 reste entraînée dans le même sens que précédemment, mais cette fois indirectement et par l'intermédiaire de la roue d'engrenage 74 qui est elle-même entraînée.

Les différents brins de la chaine se répartissent en trois groupes, à savoir d'une part un premier groupe 27a situé à droite et de configuration plane, c'est à dire formé de brins tous déroulés parallèlement au plan central de la branche centrale du bâti 10, et s'enroulant sur les pignons 28, 30, 20c, 71 ainsi que sur la partie droite du pignon double 32, d'autre part un second groupe 27b de configuration analogue au précédent mais situé à gauche et s'enroulant sur les pignons 29, 31, 19c ainsi que sur la partie gauche du pignon double 32, et enfin d'un brin unique transversal 27c reliant les deux groupes de brins précédents en passant par le pignon de renvoi 72 (fig. 10), ce brin étant le seul à subir une flexion transversale pour passer d'un côté à l'autre alors qu'il présente simultanément la particularité de ne jamais subir de fortes tractions lorsque la chaîne 27 est en mouvement, puisqu'il ne subit que celles nécessaires à la remontée des palettes 1, 2, ce qui est avantageusement favorable d'une part à la chaîne 27, et qui lui permet d'avoir une grande longévité, du fait qu'elle ne travaille ainsi en flexion que sous faible charge, et d'autre part à la chaîne fermée 34 dont la configuration peut être totalement plane du fait de cet agencement.

Les palettes 1 et 2 sont doublement reliées mécaniquement aux leviers oscillants 19 et 20 du module variateur 12, à savoir d'une part par les manivelles primaires 21 et 22 reliées aux manivelles auxiliaires 23 et 24, sur les extrémités desquelles les palettes 1 et 2 prennent un premier appui, et d'autre part par deux chaînes ouvertes latérales 37 et 38 reliant les leviers oscillants 19, 20 aux palettes 1 et 2 en s'appuyant sur des pignons 39 et 40 solidaires du bâti 10, ces chaînes fournissant aux palettes 1 et 2 un second appui décalé du premier, l'ensemble de ces deux appuis aboutissant à maintenir les deux palettes 1 et 2 dans une position horizontale ou proche de l'horizontale pendant toute la course de leurs déplacements verticaux, facilitant ainsi la station debout du passager sur le véhicule.

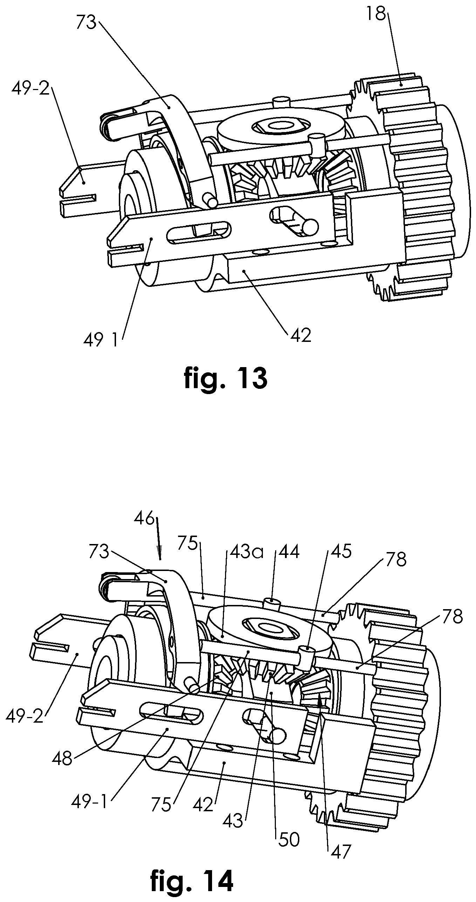

Le différentiel pilotable 5 comporte un corps (cf fig. 13 à 15) formé d'un corps supérieur non représenté et d'un corps inférieur 42, formant ensemble un carter, assemblés par serrage, et il est solidaire de la roue d'entraînement 18 elle-même entraînée par la roue dentée de sortie 14 du propulseur.

Au repos, le différentiel pilotable 5 est maintenu à l'état activé bloqué par des coincements réalisés entre une portée cylindrique 43a adjointe à son pignon planétaire 43 et deux cylindres bloqueurs 44 et 45 rétractables prenant appui d'un côté sur le corps de différentiel supérieur et de l'autre sur ladite portée cylindrique 43a contre laquelle ils sont poussés au repos par des ressorts 78, bloquant ainsi dans les deux sens la rotation du pignon planétaire 43 autour de son axe propre. Celui-ci est aussi entrainé en rotation autour de l'axe des roues 3, 4 par la roue d'entraînement 18, et il entraine par cette rotation et par engrènement avec leurs dents, deux pignons d'entrainement 47 et 48 chacun entrainant une des roues 3, 4.

Il est mis dans son état activé débloqué par un mécanisme de déblocage 46 comportant une palette pivotante 73 agissant simultanément sur deux tiges coulissantes pousseuses 75 repoussant les cylindres bloqueurs 44 et 45 de manière à autoriser la rotation du pignon planétaire 43 autour de son axe propre, tout en tournant toujours autour de l'axe des roues 3, 4. Ainsi le ralentissement d'une roue 3 ou 4 sous l'effet d'un freinage provoque la rotation du pignon planétaire 43, et donc l'accélération de l'autre des deux roues 4 ou 3, ce qui permet d'obtenir un virage sans trop de perte d'énergie, et avec une bonne stabilité.

Son état désactivé est obtenu en éloignant le pignon planétaire 43 de l'axe du différentiel 5 qui est l'axe commun des pignons d'entraînement 47 et 48 des arbres de sortie, jusqu'à ce qu'il n'y ait plus contact entre ces pignons et le pignon planétaire 43, rendant ainsi les deux arbres de sortie totalement indépendants l'un de l'autre et libres de tourner sans contrainte. Cet éloignement est provoqué par un mécanisme comportant deux cames de désactivation 49-1 et 49-2 déplacées parallèlement à l'axe du différentiel 5, comportant chacune une lumière oblique 76 et coopérant à travers un doigt 77 avec un support 50 servant de support au pignon planétaire 43.

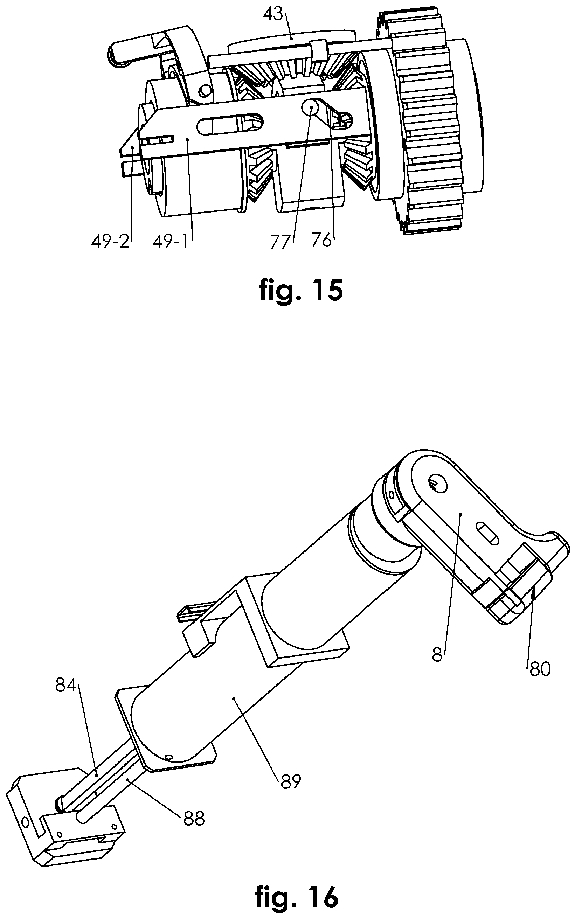

Le dispositif combiné de commande de freinage et de commande directionnelle comporte une poignée de commande 8 (cf fig. 1 et 16) orientable par rotation autour d'un axe vertical et dont une partie 80 est en outre rétractable à l'intérieur du corps principal de ladite poignée 8. La rotation de cette poignée 8, par rapport à une position de repos en position centrale, provoque d'abord le déblocage du différentiel 5 puis le freinage directionnel d'une roue 3, 4, plus ou moins intensément selon l'effort appliqué pour la rotation, par action sur le levier de manoeuvre 81 a ou 81b de l'un des pistons 16 ou 17 des freins à disque (l'un ou l'autre selon le sens de la rotation de la poignée 8, sens qui détermine la roue 3, 4 freinée et donc le sens du virage effectué). L'appui sur la partie rétractable 80 de la poignée 8 orientable provoque le freinage global par le déplacement simultané, plus ou moins grand selon l'effort d'appui appliqué, des deux cylindres 16-1 et 17-1 des pistons 16 et 17, lesquels sont reliés entre eux et articulés sur un axe commun 100 qui est également celui de leurs leviers de manoeuvre 81a et 81b. Cette disposition présente l'avantage de rendre le freinage global et le freinage directionnel totalement indépendants l'un de l'autre et en même temps superposables.

Un tel dispositif permet donc de pouvoir virer tout en freinant le véhicule, par l'action simultanée des deux freins à disque, et sans qu'il y ait d'interférence entre les deux effets produits.

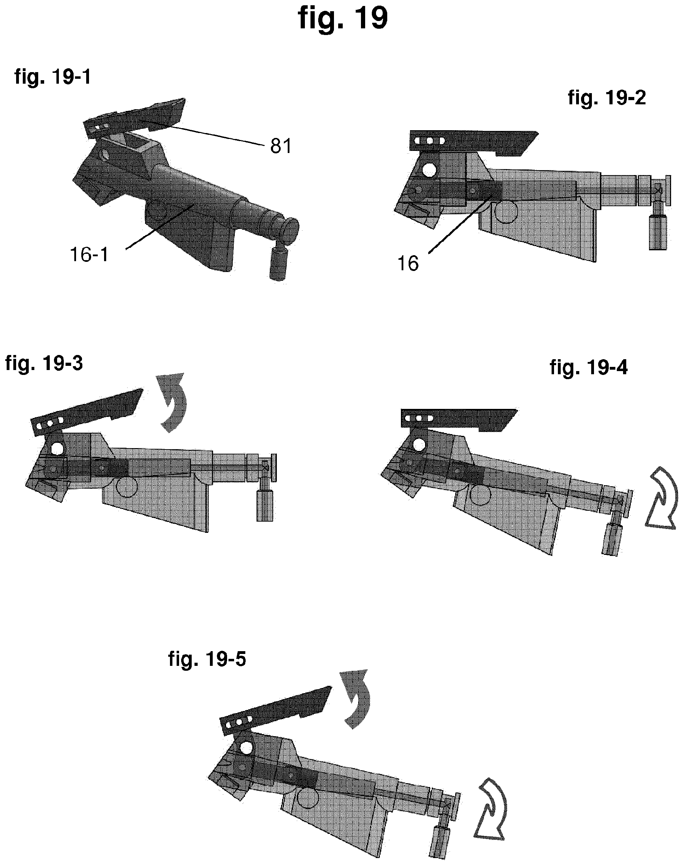

La figure 19-3 montre l'action sur un levier de manoeuvre 81a et 81b produisant un freinage unilatéral (ou directionnel) entraînant un virage du véhicule durant lequel la roue correspondant audit levier se trouve à l'intérieur du virage. La figure 19-4 montre l'action sur les cylindres produisant un freinage bilatéral (ou global) entraînant un freinage en ligne du véhicule. La figure 19-5 montre la conjugaison des actions sur les cylindres et sur un levier de manoeuvre 81a et 81b produisant un freinage bilatéral (ou global) s'additionnant à un freinage unilatéral ou directionnel accentuant le freinage de la roue à laquelle correspond ledit levier et provoquant un virage du véhicule autour de cette roue et son freinage global.

Dans une réalisation préférée de l'invention dans laquelle la partie supérieure du bâti est éventuellement rabattable et la hauteur de la poignée est réglable, les leviers de manoeuvre 81 comportent des rampes obliques destinées à coopérer avec deux galets supérieurs 82 portés par un actionneur 83, lequel est entraîné en rotation par le méplat d'entraînement 84 qui lui est coaxial (en position de roulage, ou en tous cas lorsque le bloc supérieur n'est pas rabattu). Ledit actionneur 83 comporte également une roulette inférieure 85 destinée, elle, à repousser un actionneur auxiliaire 86 dès que la poignée de commande 8 s'écarte de sa position médiane de repos. Ledit actionneur auxiliaire 86 coopère avec une série de tringles reliées au différentiel 5 pilotable selon des solutions connues de l'homme du métier, l'ensemble fonctionnant de telle sorte que lorsque la poignée de commande 8 commence sa rotation à partir de sa position médiane le premier effet obtenu est le déblocage du différentiel 5, après quoi l'un des deux galets supérieurs 82 vient au contact de la rampe qui lui correspond et lorsque la rotation se poursuit le levier de manoeuvre 81a ou 81b est soulevé, ce qui a pour effet de réaliser le freinage différentiel directionnel. Lorsque la poignée 8 est ramenée en position médiane, inversement, le freinage directionnel cesse d'abord, après quoi le différentiel 5 repasse à l'état bloqué. Dans cette même réalisation préférée, les deux corps de piston 16 et 17 sont couplés par une pièce de liaison 87. Ils sont abaissés lorsqu'un appui est appliqué sur le poussoir 80 de la poignée 8, la liaison entre cette pièce et l'ensemble des deux cylindres 16-1 et 17-1 des pistons 16 et 17 étant assurée par une chaîne cinématique comportant un dispositif de coincement du poussoir final 88, dispositif grâce auquel cet abaissement s'effectue quelle que soit la position en hauteur du tube rétractable 89 portant en bout la poignée de commande 8. Au début de l'appui sur le poussoir 80, le coincement s'opère sur le poussoir final 88 sans que celui-ci ne se déplace encore, puis le prolongement de l'appui est en mesure de déplacer le poussoir devenu coincé, avec pour effet le freinage global du véhicule. Ce freinage global (ou bilatéral) est ainsi rendu complètement indépendant du freinage directionnel (ou unilatéral), et lui est donc superposable.

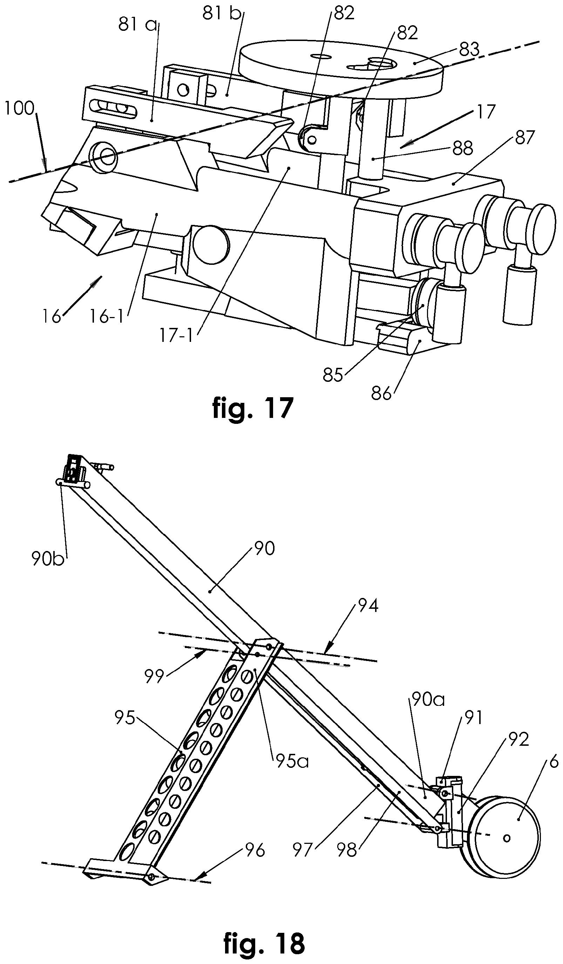

Dans une réalisation préférée de l'invention selon laquelle la partie supérieure du Té est repliable (fig. 3) :
- la pièce 88 de commande de freinage global (ou bilatéral), qui se déplace en translation par coincement dans sa partie supérieure consécutivement à une action sur le poussoir 80, est composée de deux demie tiges montées en vis-à-vis de part et d'autre d'une charnière assurant le pliage ;
- l'actionneur de freinage directionnel (ou unilatéral) 83 (voir fig. 17) est entrainé par une rotation de la poignée 8 transmise par une tige 84 comportant un méplat prolongé par un téton de liaison coopérant lui-même avec un trou (téton et trou non représentés) ménagé dans ledit actionneur 83. Cette dernière disposition est connue de l'homme du métier.

L'ensemble support de roulette arrière repliable 9 est constitué (voir fig. 18) d'une poutre 90 portant la roulette arrière 6 en sa première extrémité 90a par l'intermédiaire d'une articulation 91 et d'une pièce de liaison 92. Ladite poutre 90 est susceptible de prendre deux positions particulières, à savoir une position oblique où elle se déploie vers l'arrière du véhicule en écartant de lui son extrémité 90a, et une position verticale où elle vient se positionner contre la face arrière du bâti 10. Le passage de l'une à l'autre de ces deux positions se fait par un double guidage opéré d'une part par le coulissement linéaire de la seconde extrémité 90b de cette poutre 90 dans deux lumières parallèles 93 (cf fig. 1 et 2) aménagées dans le bâti 10 chargées de maintenir ladite extrémité 90b en contact avec la face arrière plane du bâti 10, et d'autre part par le pivotement de ladite poutre 90 autour d'un axe 94 situé environ en son milieu. Ledit axe 94 est entraîné par une poutrelle 95, en forme de Té, pivotant elle-même autour d'un axe 96 parallèle à la branche transversale du bâti 10 et situé en bas et à l'arrière de celui-ci. L'extrémité 95a de la poutrelle 95, solidarisée à l'axe 94, déplace celui-ci selon une trajectoire circulaire, de sorte que si la première extrémité 90a de la poutre 90 reste toujours proche du bâti 10 lorsqu'elle coulisse contre lui en changeant de hauteur, sa seconde extrémité 90b s'éloigne plus ou moins du bâti 10 en fonction de la position donnée à l'axe 94 par le pivotement de la pièce 95, l'ensemble de ces deux opérations combinées de coulissement et de pivotement aboutissant à faire varier l'inclinaison de la poutre 90 par rapport au bâti 10, et donc de donner à celle-ci les deux positions particulières utiles correspondant respectivement à la configuration de route du véhicule et à sa configuration compactée.

Avantageusement, la poutre 90 est maintenue en place automatiquement lorsqu'elle arrive dans l'une ou l'autre de ses deux positions particulières utiles, par deux systèmes de cliquet 61, le passage de l'une à l'autre position n'exigeant de l'opérateur qu'une action de libération du cliquet actif suivie du coulissement de l'extrémité 90a jusqu'à la butée opposée où l'autre cliquet se bloque alors automatiquement. Avantageusement encore, l'axe de l'articulation 91 de la roulette arrière 6 reste sensiblement vertical dans les deux configurations du véhicule du fait d'une orientation donnée à l'articulation 91 par deux bras orienteurs 97 et 98 prenant appui d'un côté sur l'articulation 91 et de l'autre sur un axe 99 solidaire de la poutrelle 95. Cela permet à la roulette 6 arrière de fournir un point d'appui pour le maintien stable du véhicule en position verticale lorsqu'il est compacté.

Le passage du différentiel 5 à l'état désactivé s'effectue automatiquement lorsque l'extrémité 90b de la poutre 90 arrive dans sa position la plus haute, c'est-à-dire lorsque le véhicule passe en configuration compactée de bagage roulable, cette extrémité 90b venant alors pousser vers le haut une tige 60 reliée au dispositif de pilotage du différentiel 5, lequel dispositif se trouve dans le bâti 10 à la hauteur de ladite extrémité. En agissant sur cette tige 60, et par le jeu des tringles de transmission du dispositif de pilotage, les cames de désactivation 49-1 et 49-2 du différentiel 5 sont poussées de sorte à agir sur le support 50 supportant le pignon planétaire 43, et par là à écarter ce pignon planétaire 43 de l'axe du différentiel 5 et désactiver celui-ci.

Le véhicule objet de l'invention peut être pourvu, en option, d'une selle (non représentée) appuyée sur un support lui-même articulé sur la poutre 90 et relié en haut du bâti 10 par un tirant, l'ensemble étant construit de manière à ce que la selle puisse venir se placer, en configuration compactée, le long de cette poutre 90. L'avantage de cette option est de permettre au passager de s'asseoir quand le véhicule est à l'arrêt, quand il roule soit à plat soit en descente, et plus généralement quand il ne subit que de faibles accélérations.

## Revendications

1. Propulseur comportant deux palettes (1,2) à actionnement alterné, par exemple par des appuis exercés par l'un puis l'autre des deux pieds d'un utilisateur, chacune des palettes entraînant un levier oscillant (19,20) mobile en rotation autour d'un axe d'oscillation (25) par action sur une première extrémité dudit levier oscillant, dans lequel le propulseur comporte un module redresseur de sens (13) comportant deux roues libres actionnées, chacune dans son sens entraînant, par l'action sur l'une desdites palettes, et couplées de telle sorte qu'une roue dentée de sortie (14) soit entraînée toujours dans le même sens quelle que soit la palette actionnée, **caractérisé en ce qu'**il comprend en outre un module variateur (12) comportant un moyen de translation dudit axe d'oscillation (25) dans une lumière longitudinale de chacun desdits leviers oscillants (19,20), de sorte à modifier le bras de levier desdits leviers oscillants.

2. Propulseur selon la revendication 1, comportant en outre une chaîne ouverte (27), dont les extrémités (27-1 et 27-2) sont chacune attachées à une deuxième extrémité de l'un desdits leviers oscillants (19,20), et comprenant deux brins parallèles disposés entre chacune des extrémités de la chaîne ouverte et un pignon à double denture (32) lui-même solidaire d'un plateau denté (33), et un brin transversal reliant les deux dentures dudit pignon à double denture en passant par un pignon de renvoi.

3. Véhicule individuel à roues comportant un propulseur selon l'une des revendications précédentes, comprenant en outre un bâti (10) en forme de T inversé, comportant au moins deux roues motrices et directrices (3,4), chacune munie d'un frein (62), disposées respectivement aux extrémités de la branche transversale (65) du T et entraînées en rotation par ledit propulseur, et une commande de direction et de freinage (8) disposée dans la partie supérieure de la branche centrale (64) du T, une roulette (6) agencée pour s'orienter librement portée par un support de roulette (9), ladite roulette (6) étant désaxée par rapport aux roues motrices et directrices (3,4) et formant avec ces dernières le polygone de sustentation du véhicule, les palettes du propulseur, servant de support pour le passager, étant placées à la verticale dudit polygone de sustentation, et un différentiel (5) apte à créer un différentiel de vitesse entre les deux roues (3,4) et à produire un virage par un freinage directionnel appliqué à une seule roue.

4. Véhicule selon la revendication précédente, **caractérisé en outre en ce que** chaque palette est reliée audit levier oscillant par l'intermédiaire d'une manivelle primaire (21,22) montée articulée à la première extrémité (19a,20a) dudit levier oscillant et appuyée en position de fonctionnement sur une manivelle auxiliaire (23,24) montée articulée sur ladite manivelle primaire et ledit propulseur comporte en outre pour chaque palette une chaîne ouverte auxiliaire (37,38) reliant le levier oscillant à la palette en s'appuyant sur un pignon auxiliaire (39, 40) solidaire du bâti, de sorte à permettre un maintien de la palette dans une position proche de l'horizontale pendant son actionnement.

5. Véhicule selon la revendication précédente, **caractérisé en outre en ce que** les manivelles auxiliaires (23,24) et les palettes (1,2) sont relevables en créant un écart angulaire entre les manivelles primaires et auxiliaires, celles-ci s'appuyant en butée, en position de travail, sur les dites manivelles primaires.

6. Véhicule selon l'une des revendications 3 à 5, dans lequel ledit propulseur est un propulseur selon la revendication 2, **caractérisé en outre en ce que** ledit module redresseur comporte une chaîne fermée (34) reliant ledit plateau denté à deux pignons (35,36) de sorte à les faire tourner tous les deux dans le même sens, pignons sur chacun desquels est montée une desdites deux roues libres (13-1, 13-2) active dans un sens pour le premier pignon, et dans le sens opposé pour le deuxième pignon, et la première roue libre porte la roue dentée (14) de sortie du redresseur agencée pour entraîner en rotation une autre roue (18) dite d'entrée du différentiel, la deuxième roue libre portant une roue d'engrenage (74) identique à la roue de sortie et engrenant sur celle-ci.

7. Véhicule selon l'une des revendications 3 à 6, **caractérisé en outre en ce que** le moyen de translation comporte d'une part un dispositif de blocage de position de l'axe d'oscillation (25) comportant deux galets de blocage (51,52) agissant chacun dans un sens par coincement d'un traîneau (53) solidaire de l'axe d'oscillation sur un guide fixé au bâti du véhicule, ce coincement ayant pour effet de fixer l'axe d'oscillation (25) par rapport audit bâti, d'autre part une crémaillère de commande (55) entraînée par un pignon de manette (69) lui-même solidaire d'une manette (7) de variation de vitesse, et munie de deux ergots (79-1) agencés pour pousser chacun l'un des galets de blocage selon le sens dans lequel la crémaillère de commande est entraînée, et d'un ergot (79-2) agencé pour pousser ledit traîneau dès que le galet est débloqué.

8. Véhicule selon l'une des revendications 3 à 7, **caractérisé en outre en ce qu'**il comporte deux crémaillères de positionnement (56,57) fixées au bâti dudit véhicule, chaque extrémité de l'axe d'oscillation (25) étant munie d'un pignon (70) engrenant sur l'une desdites crémaillères de positionnement, de sorte à maintenir fixe l'orientation de l'axe d'oscillation par rapport audit bâti.

9. Véhicule selon l'une des revendications 3 à 8, **caractérisé en outre en ce que** ledit différentiel (5) est conçu pilotable entre une position activée débloquée, dans laquelle un ralentissement de l'une des roues (3, 4) produit en réaction une accélération de même ordre de l'autre roue (4, 3), et une position désactivée dans laquelle les deux roues (3, 4) sont indépendantes l'une de l'autre et libres en rotation.

10. Véhicule selon la revendication précédente, **caractérisé en outre en ce que** ledit différentiel (5) comporte deux pignons de roue (47, 48) solidaire chacun d'une des roues (3, 4) et un pignon planétaire (43) à axe perpendiculaire à l'axe des roues (3, 4), engrenant sur les deux pignons de roue (47, 48), ledit pignon planétaire (43) étant bloqué en rotation autour de son axe en position activée bloquée, libre en rotation en position activée débloquée, et écarté des deux pignons de roue (47, 48) de sorte à ne plus engrener en position désactivée.

11. Véhicule selon la revendication précédente, **caractérisé en outre en ce que** ledit pignon planétaire (43) comporte une portée cylindrique (43a) et ledit différentiel (5) comporte au moins un, de préférence deux, galets de blocage (44, 45) aptes à appuyer sur ladite portée cylindrique (43a) de sorte à bloquer ledit pignon planétaire (43) en rotation, et une palette pivotante (73) agencée pour repousser ledit galet de blocage (44, 45) de sorte qu'il ne bloque plus ledit pignon planétaire (43) suite à une manoeuvre de la commande (8) vers une position de virage.

12. Véhicule selon l'une des revendications 3 à 11, **caractérisé en outre en ce qu'**il comporte un dispositif d'actionnement unilatéral de chacun des freins (62) des roues (3, 4) et un dispositif d'actionnement bilatéral de chacun desdits freins (62) des roues (3,4) lesdits deux dispositifs pouvant être commandés séparément et étant agencés aptes à ce que leurs effets se superposent lorsqu'ils sont commandés simultanément.

13. Véhicule selon la revendication précédente **caractérisé en outre en ce que** ledit dispositif d'actionnement unilatéral du frein de chacune des roues (3,4) comprend un piston de frein (16, 17) logé dans un cylindre de frein (16-1 , 17-1) et un levier de manoeuvre (81 a, 81 b) dudit piston de frein (16, 17), les dits deux cylindres de frein (16-1, 17-1) et les dits deux leviers de manoeuvre (81 a, 81 b) étant agencés déplaçables en rotation autour de leurs axes d'articulation respectifs, à partir d'une position de repos en butée, dans un sens pour lesdits deux leviers de manoeuvre (81 a, 81 b) et dans le sens opposé pour lesdits deux cylindres de frein (16-1, 17-1).

14. Véhicule selon la revendication précédente **caractérisé en outre en ce que** ledit dispositif d'actionnement bilatéral du frein de chacune des roues (3,4) comprend d'une part, un axe unique autour duquel sont agencés les dits levier de manoeuvre (81 a, 81 b) et les dits cylindres de frein (16-1, 17-1) et d'autre part, une pièce (87) couplant les dits cylindres de frein (16-1, 17-1) l'un à l'autre.

## Patentansprüche

1. Triebwerk mit zwei Paletten (1, 2), die abwechselnd betätigt werden, beispielsweise durch Treten, die von einem und dann dem anderen der beiden Füße eines Benutzers ausgeübt werden, wobei jede der Paletten einen Schwinghebel (19, 20) antreibt, der durch Einwirkung auf ein erstes Ende des Schwinghebels um eine Schwingungsachse (25) drehbar beweglich ist, wobei das Triebwerk ein Richtungsgleichrichtermodul (13) umfasst, das zwei Freiläufe umfasst, die jeweils in seiner Antriebsrichtung betätigt werden, durch Einwirken auf eine der Paletten, und so gekoppelt, dass ein Abtriebszahnrad (14) immer in die gleiche Richtung angetrieben wird, unabhängig von der betätigten Palette, **dadurch gekennzeichnet, dass** es ferner ein Reglermodul (12) mit Mitteln zum Verschieben der Schwingungsachse (25) in ein Längshohlraum jedes der Schwinghebel (19, 20) umfasst, um den Hebelarm der Schwinghebel zu modifizieren.

2. Triebwerk nach Anspruch 1, ferner umfassend eine offene Kette (27), deren Enden (27-1 und 27-2) jeweils an einem zweiten Ende eines der Schwinghebel (19, 20) befestigt sind, und umfassend zwei parallele Kettentrüme, die zwischen jedem der Enden der offenen Kette und einem Doppelzahnritzel (32), das mit einer Zahnscheibe (33) fest verbunden ist, angeordnet sind, und einen Querstrang, der die beiden Zähne des Doppelzahnrads über ein Ablenkritzel verbindet.

3. Einzelradfahrzeug, umfassend ein Triebwerk nach einem der vorstehenden Ansprüche, ferner umfassend einen umgekehrten T-förmigen Rahmen (10), umfassend mindestens zwei Antriebs- und Lenkräder (3, 4), die jeweils mit einer Bremse (62) versehen sind, die jeweils an den Enden des Querarms (65) des T angeordnet sind und von dem Triebwerk in Drehung angetrieben sind, und eine Lenk- und Bremssteuerung (8), die im oberen Teil des zentralen Zweiges (64) des T angeordnet ist, ein Rad (6), das so angeordnet ist, dass es durch einen Radträger (9) frei ausgerichtet werden kann, wobei das Rad (6) in Bezug auf die Antriebs- und Lenkräder (3, 4) versetzt ist und mit diesem das Hubpolygon des Fahrzeugs bildet, wobei die Triebwerkpaletten, die als Stütze für den Benützer dienen und vertikal des Hubpolygons angeordnet sind, und ein Differential (5), das in der Lage ist, ein Geschwindigkeitsdifferenzial zwischen den beiden Rädern (3, 4) zu erzeugen und eine Drehung durch Richtungsbremse zu erzeugen, die auf ein einzelnes Rad angewendet wird.

4. Fahrzeug nach dem vorstehenden Anspruch, ferner **dadurch gekennzeichnet, dass** jede Palette mit dem Schwenkhebel mittels einer Primärkurbel (21, 22) verbunden ist, die am ersten Ende (19a, 20a) des Schwenkhebels angelenkt und in der Betriebsstellung an einer Hilfskurbel (23,24) abgestützt ist, schwenkbar an der Primärkurbel montiert ist und das Triebwerk ferner für jede Palette eine Hilfsöffnungskette (37, 38) umfasst, die den Schwenkhebel mit der Palette verbindet, indem sie sich auf ein Hilfsritzel (39, 40) stützt, das mit dem Rahmen fest verbunden ist, so dass die Palette während ihres Betriebs in einer Position nahe der Horizontalen gehalten werden kann.

5. Fahrzeug nach dem vorstehenden Anspruch, ferner **dadurch gekennzeichnet, dass** die Hilfskurbeln (23, 24) und die Paletten (1, 2) durch Erzeugen eines Winkelabstandes zwischen den Primär- und Hilfskurbeln angehoben werden können, wobei diese in Arbeitsposition gegen die Primärkurbeln anliegen.

6. Fahrzeug nach einem der Ansprüche 3 bis 5, bei dem das Triebwerk ein Triebwerk nach Anspruch 2 ist, ferner **dadurch gekennzeichnet, dass** das Gleichrichtermodul eine geschlossene Kette (34) umfasst, die die Zahnscheibe mit zwei Kettenrädern (35, 36) verbindet, um sie beide in die gleiche Richtung zu drehen, wobei an jedem der beiden Kettenräder eines der beiden Freiläufe (13-1, 13-2) montiert ist, die in einer Richtung für das erste Ritzel und in der entgegengesetzten Richtung für das zweite Ritzel aktiv sind, und der erste Freilauf trägt das Antriebszahnrad (14), das angeordnet ist, um ein weiteres sogenanntes Differential-Eingangszahnrad (18) zu drehen, wobei der zweite Freilauf ein Zahnrad (74) trägt, das identisch mit dem Ausgangsrad ist und in dieses eingreift.

7. Fahrzeug nach einem der Ansprüche 3 bis 6, ferner **dadurch gekennzeichnet, dass** das Übersetzungsmittel einerseits eine Vorrichtung zum Blockieren der Position der Schwingungsachse (25) umfasst, die zwei Blockierrollen (51, 52) umfasst, die jeweils in eine Richtung wirken, indem sie einen Schlitten (53), der mit der Schwingungsachse integral ist, auf einer am Fahrzeugrahmen befestigten Führung fixieren, wobei diese Fixierung den Effekt hat, die Schwingungsachse (25) in Bezug auf den Rahmen zu fixieren, andererseits eine Steuerzahnstange (55), die von einem Hebelritzel (69) angetrieben wird, das an einem Geschwindigkeitsänderungshebel (7) befestigt ist und mit zwei Laschen (79-1) versehen ist, die jeweils angeordnet sind, um eine der Feststellrollen in die Richtung zu drücken, in der die Steuerzahnstange angetrieben wird, und mit einer Lasche (79-2), die angeordnet ist, um den Schlitten zu schieben, sobald die Rolle losgelassen wird.

8. Fahrzeug nach einem der Ansprüche 3 bis 7, **dadurch gekennzeichnet, dass** es ferner zwei am Rahmen des Fahrzeugs befestigte Positionierzahnstangen (56, 57) umfasst, wobei jedes Ende der Schwingungsachse (25) mit einem Ritzel (70) versehen ist, das auf einem der Positionierzahnstangen eingreift, um die Ausrichtung der Schwingungsachse in Bezug auf den Rahmen festzuhalten.

9. Fahrzeug nach einem der Ansprüche 3 bis 8, ferner **dadurch gekennzeichnet, dass** das Differential (5) so ausgelegt ist, dass es zwischen einer aktivierten entriegelten Position, in der eine Verzögerung eines der Räder (3, 4) als Reaktion eine ähnliche Beschleunigung des anderen Rades (4, 3) erzeugt, und einer deaktivierten Position, in der die beiden Räder (3, 4) unabhängig voneinander und frei in Drehung sind, steuerbar ist.

10. Fahrzeug nach dem vorstehenden Anspruch, ferner **dadurch gekennzeichnet, dass** das Differential (5) ferner zwei Radzahnräder (47, 48) umfasst, die jeweils mit einem der Räder (3, 4) integral sind, und ein Planetenritzel (43) mit einer Achse senkrecht zur Achse der Räder (3, 4), die auf die beiden Radzahnräder (47) eingreifen, 48), wobei das Planetenritzel (43) in der verriegelten aktivierten Position um seine Achse drehbar blockiert ist, in der entriegelten aktivierten Position frei drehbar und von den beiden Radritzel (47, 48) beabstandet ist, um in der deaktivierten Position nicht mehr einzugreifen.

11. Fahrzeug nach dem vorstehenden Anspruch, ferner **dadurch gekennzeichnet, dass** das Planetenritzel (43) ein zylindrisches Lager (43a) und das Differential (5) mindestens eine, vorzugsweise zwei, Sperrrollen (44, 45) aufweist, die in der Lage sind, auf das zylindrische Lager (43a) zu drücken, um das Planetenritzel (43) in Drehung zu blockieren, und eine schwenkbare Palette (73), die angeordnet ist, um die Verriegelungsrolle (44, 45) zurückzudrücken, so dass sie das Planetenritzel (43) nach einem Manöver der Steuerung (8) in Richtung einer Kurveposition, nicht mehr blockiert.

12. Fahrzeug nach einem der Ansprüche 3 bis 11, ferner **dadurch gekennzeichnet, dass** es eine Vorrichtung zum einseitigen Betätigen jeder der Bremsen (62) der Räder (3, 4) und eine Vorrichtung zum beidseitigen Betätigen jeder der Bremsen (62) der Räder (3, 4) umfasst, wobei die beiden Vorrichtungen getrennt steuerbar sind und so angeordnet sind, dass sich ihre Auswirkungen überlappen, wenn sie gleichzeitig gesteuert werden.

13. Fahrzeug nach dem vostehenden Anspruch, ferner **dadurch gekennzeichnet, dass** die einseitige Bremsbetätigungsvorrichtung jedes der Räder (3, 4) einen Bremskolben (16, 17), der in einem Bremszylinder (16-1, 17-1) untergebracht ist, und einen Betätigungshebel (81 a, 81 b) des Bremskolbens (16, 17) umfasst, wobei die beiden Bremszylinder (16-1 , 17-1) und die beiden Betätigungshebel (81 a, 81 b) so angeordnet sind, dass sie um ihre jeweiligen Gelenkachsen aus einer Ruheposition am Anschlag, in eine Richtung für die beiden Betätigungshebel (81 a, 81 b) und in die entgegengesetzte Richtung für die beiden Bremszylinder (16-1, 17-1) drehbar sind.

14. Fahrzeug nach dem vorstehenden Anspruch, ferner **dadurch gekennzeichnet, dass** die bilaterale Bremsbetätigungsvorrichtung jedes der Räder (3, 4) einerseits eine einzelne Achse umfasst, um die die Betätigungshebel (81 a, 81 b) und die Bremszylinder (16-1, 17-1) angeordnet sind, und andererseits ein Teil (87), das die Bremszylinder (16-1, 17-1) miteinander verbindet.

## Claims

1. Propeller comprising two pedals (1, 2) alternately operated, for example by pressures exerted by one and then the other of a user's two feet, each of the pedals driving an oscillating lever (19, 20) movable in rotation about an oscillation axis (25) by action on a first end of said oscillating lever, wherein the propeller comprises a direction rectifier module (13) comprising two freewheels operated, each in its driving direction, by acting on one of said pedals, and coupled in such a way that an output gear (14) is always driven in the same direction whatever the pedal operated, **characterized in that** it further comprises a variator module (12) comprising a translation means of said oscillation axis (25) into a longitudinal opening of each of said oscillating levers (19, 20), so as to modify the lever arm of said oscillating levers.

2. Propeller according to claim 1, further comprising an open chain (27), whose ends (27-1 and 27-2) are each attached to a second end of one of said oscillating levers (19, 20), and comprising two parallel strands arranged between each of the ends of the open chain and a double-toothed pinion (32) itself integral with a toothed plate (33), and a transverse strand connecting the two teeth of said double toothed sprocket via a deflection sprocket.

3. Individual wheeled vehicle comprising a propeller according to one of the previous claims, further comprising an inverted T-shaped frame (10), comprising at least two driving and steering wheels (3, 4), each provided with a brake (62), respectively arranged at the ends of the transverse branch (65) of the T and driven in rotation by said propeller, and a steering and braking control (8) arranged in the upper part of the central branch (64) of the T, a small wheel (6) arranged to be freely orientated carried by a small wheel support (9), said small wheel (6) being offset with respect to the driving and steering wheels (3, 4) and forming with the latter the support polygon of the vehicle, the propeller pedals, serving as a support for the passenger, being placed vertically of said support polygon, and a differential module (5) capable of creating a speed differential between the two wheels (3, 4) and producing a turn by directional braking applied to a single wheel.

4. Vehicle according to the previous claim, further **characterized in that** each pedal is connected to said oscillating lever by means of a primary crank (21, 22) hingedly mounted at the first end (19a, 20a) of said oscillating lever and leaning in operating position on an auxiliary crank (23,24) hingedly mounted on said primary crank and said propeller further comprises for each pedal an auxiliary open chain (37, 38) connecting the oscillating lever to the pedal by leaning on an auxiliary sprocket (39, 40) integral with the frame, so as to allow the pedal to be held in a position close to horizontal during its operation.

5. Vehicle according to the previous claim, further **characterized in that** the auxiliary cranks (23, 24) and the pedals (1, 2) can be raised by creating an angular gap between the primary and auxiliary cranks, the latter resting in abutment, in the working position, on said primary cranks.

6. Vehicle according to one of claims 3 to 5 wherein said propeller is a propeller according to claim 2, further **characterized in that** said rectifier module comprises a closed chain (34) connecting said toothed plate to two sprockets (35, 36) so as to rotate them both in the same direction, sprockets on each of which is mounted one of said two freewheels (13-1, 13-2) active in one direction for the first sprocket, and in the opposite direction for the second sprocket, and the first freewheel carries the rectifier output gear (14) arranged to drive in rotation another so-called differential module input gear (18), the second freewheel carrying a gearwheel (74) identical to and engaging the output gear.

7. Vehicle according to one of claims 3 to 6, further **characterized in that** the translation means comprises on the one hand a blocking device of the position of the oscillation axis (25) comprising two blocking rollers (51, 52) each acting in one direction by trapping a sled (53) integral with the oscillation axis on a guide fixed to the vehicle frame, this trapping resulting in fixing the oscillation axis (25) with respect to said frame, on the other hand, a control rack (55) driven by a lever sprocket (69) itself fixed to a speed variation lever (7), and provided with two lugs (79-1) each arranged to push one of the blocking rollers in the direction in which the control rack is driven, and with a lug (79-2) arranged to push said sled as soon as the roller is released.

8. Vehicle according to one of claims 3 to 7, further **characterized in that** it comprises two positioning racks (56, 57) fixed to the frame of said vehicle, each end of the oscillation axis (25) being provided with a sprocket (70) intermeshing on one of said positioning racks, so as to maintain fixed the orientation of the oscillation axis with respect to said frame.

9. Vehicle according to one of claims 3 to 8, further **characterized in that** said differential module (5) is designed to be controllable between an activated unlocked position, in which a deceleration of one of the wheels (3, 4) produces in reaction a similar acceleration of the other wheel (4, 3), and a deactivated position in which the two wheels (3, 4) are independent from each other and free in rotation.

10. Vehicle according to the previous claim, further **characterized in that** said differential module (5) comprises two wheel sprockets (47, 48) each integral with one of the wheels (3, 4) and a planetary sprocket (43) with an axis perpendicular to the axis of the wheels (3, 4), intermeshing on the two wheel sprockets (47, 48), said planetary sprocket (43) being blocked in rotation about its axis in the locked activated position, free in rotation in the unlocked activated position, and spaced from the two wheel sprockets (47, 48) so as not to engage in the deactivated position.

11. Vehicle according to the previous claim, further **characterized in that** said planetary sprocket (43) comprises a cylindrical bearing (43a) and said differential module (5) comprises at least one, preferably two, blocking rollers (44, 45) capable of pressing on said cylindrical bearing (43a) so as to block said planetary sprocket (43) in rotation, and a pivoting pallet (73) arranged to push back said blocking roller (44, 45) so that it does not block anymore said planetary sprocket (43) following a manoeuvre of the control (8) towards a turning position.

12. Vehicle according to one of claims 3 to 11, further **characterized in that** it comprises a unilateral actuation device of each of the brakes (62) of the wheels (3, 4) and a bilateral actuation device of each of said brakes (62) of the wheels (3, 4), said two devices being separately controllable and being arranged so that their effects overlap when they are controlled simultaneously.

13. Vehicle according to the previous claim, further **characterized in that** said unilateral actuation device of the break of each of the wheels (3, 4) comprises a brake piston (16, 17) housed in a brake cylinder (16-1, 17-1) and an operating lever (81 a, 81b) of said brake piston (16, 17), said two brake cylinders (16-1, 17-1) and said two operating levers (81 a, 81 b) being arranged so as to be displaceable in rotation about their respective hinge axes, from a resting position in abutment, in one direction for said two operating levers (81 a, 81 b) and in the opposite direction for said two brake cylinders (16-1, 17-1).

14. Vehicle according to the previous claim, further **characterized in that** said bilateral actuation device of the break of each of the wheels (3, 4) comprises, on the one hand, a single axis around which are arranged said operating lever (81a, 81b) and said brake cylinders (16-1, 17-1) and, on the other hand, a part (87) coupling said brake cylinders (16-1, 17-1) to each other.
